**Europäisches Patentamt**

**European Patent Office**

**Office européen des brevets**

(11) Veröffentlichungsnummer: **0 141 949**
**B1**

(12) **EUROPÄISCHE PATENTSCHRIFT**

(45) Veröffentlichungstag der Patentschrift:
22.07.87

(51) Int. Cl.⁴: **G 01 D 15/34**

(21) Anmeldenummer: **84110462.3**

(22) Anmeldetag: **03.09.84**

(54) **Elektrisches Gerät mit Schreibvorrichtung.**

(30) Priorität: **19.09.83 DE 3333781**

(43) Veröffentlichungstag der Anmeldung:
**22.05.85 Patentblatt 85/21**

(45) Bekanntmachung des Hinweises auf die Patenterteilung:
**22.07.87 Patentblatt 87/30**

(84) Benannte Vertragsstaaten:
**CH DE FR LI SE**

(56) Entgegenhaltungen:
**EP-A-0 048 882**
**DE-A-2 925 769**
**GB-A-912 842**
**US-A-4 403 231**

(73) Patentinhaber: **Siemens Aktiengesellschaft Berlin
und München, Wittelsbacherplatz 2, D-8000
München 2 (DE)**

(72) Erfinder: **Franke, Rolf- Dieter, Gellertstrasse 38,
D-7500 Karlsruhe (DE)**
Erfinder: **Häfner, Kurt, Max- Dortu- Strasse 5,
D-7500 Karlsruhe (DE)**
Erfinder: **Pfitzner, Ulrich, Schulstrasse 29, D-7500
Karlsruhe (DE)**

LIBER, STOCKHOLM 1987

## Beschreibung

Die Auswertung von Aufzeichnungen, wie sie mit elektrischen Geräten vorgenommen werden, erfolgt häufig schon während des Aufzeichnungsvorganges oder unmittelbar danach. In diesen Fällen ist es notwendig, die Aufzeichnung baldmöglichst ablesen zu können. Dem steht häufig die räumliche Anordnung der Aufzeichnungsvorrichtung entgegen. Dies ist beispielsweise bei Meßgeräten wie Punktdruckern oder Linienschreibern der Fall, bei denen ein linear bewegbarer Schreibkopf einem senkrecht dazu bewegbaren, zwischen zwei Walzen gespannten Registrierstreifen zugeordnet ist. Häufig hat die Verwendung eines Schreibkopfes auch zur Folge, daß das Registrierpapier verhältnismäßig tief im Gerät angeordnet ist. Dadurch wird der optische Zugang zu der aufgezeichneten Kurve oder den aufgezeichneten alphanumerischen Zeichen zusätzlich erschwert. Ähnliche Probleme ergeben sich bei Tintendruckern oder Fernschreibmaschinen, bei denen das Papier von unten nach oben transportiert und der Papierwagen mit dem Schreibkopf hin- und herläuft. Damit das zuletzt geschriebene Zeichen sichtbar ist, wird hier der Papierwagen im Pilgerschritt bewegt.

In der GB-PS 9 12 842 ist ein Aufzeichnungsgerät beschrieben, bei dem ein hinter einer Scheibe befindlicher Aufzeichnungsträger von innen durch eine Tintenfeder beschriftet wird. Um die Aufzeichnungen von außen durch die Scheibe gut erkennbar zu machen, ist eine Beleuchtungseinrichtung im Innern des Gerätes vorgesehen. Abgesehen von dem durch die Beleuchtung hervorgerufenen Energieverbrauch stellt auch der Ersatz des Leuchtkörpers einen wirtschaftlichen und handhabungsmäßigen Nachteil für dieses Gerät dar.

An sich sind zur Wiedergabe alphanumerischer Zeichen auch Schreibköpfe bekannt, mit denen die Zeichen mosaikartig aus einzelnen Farbpunkten zusammengesetzt werden. Bei diesen sogenannten Tintendruckern werden die einzelnen Punkte mittels piezoelektrisch anregbarer Tintenkanonen erzeugt, die je Erregungsimpuls ein Tintentröpfchen aus einer am Ende der Tintenkanone befindlichen Spritzdüse ausstoßen (DE-OS 25 43 420).

Demgegenüber bezieht sich die Erfindung auf ein elektrisches Gerät mit einer Vorrichtung zum Aufzeichnen von Kurven und/oder alphanumerischen Zeichen, bei der ein linear bewegbarer Schreibkopf einem senkrecht dazu bewegbaren, zwischen zwei Walzen gespannten Registrierstreifen zugeordnet ist, wobei der Schreibkopf auf der dem Geräteinnern zugekehrten Seite des Registrierstreifens angeordnet und als piezoelektrisch angeregter Tintendruckkopf ausgebildet ist.

Ein derartiges Gerät ist der EP -A- 0 048 882 zu entnehmen. Das dort als Registrierstreifen vorgesehene holzfreie, nichtkalandrierte und schwachsatinierte Dünndruckpapier hat sich jedoch oft als nicht genügend reißfest erwiesen. Insbesondere wenn der Antrieb des Papiers durch Stiftenräder in Verbindung mit einem perforierten Rand des Registrierstreifens erfolgen soll, reißt das Papier leicht an der Perforierung ein.

Eine Verstärkung des Papiers auf die Weise, daß die Dicke des Registrierstreifens vergrößert wird, zeigte sich als für die Wiedergabe der Schrift abträglich. Diese wird bekanntlich von der gegenüber der Schreibseite abgewandten Seite des Registrierstreifens beobachtet. Bei einem dickeren Registrierstreifen hat die eindringende Tinte ein größeres Volumen zur Ausbreitung in dem Papier. Dies führt zu einer für den Beobachter verschwommeneren Schrift.

In der DE-OS 29 25 769 ist ein Aufzeichnungsblatt zur Druckfarbendüsenaufzeichnung beschrieben. In der Schrift sind hauptsächlich Papierrezepte angegeben, die sich gut für die Wiedergabe von nach einem Aufspritzverfahren hergestellten Mehrfarbendrucken bei Betrachtung sowohl unter durchscheinendem als auch unter reflektiertem Licht eignen. Eine wesentliche Eigenschaft dieser Papiere ist, daß sie aus einem Träger und einer zusätzlichen Tintenabsorptionsschicht bestehen. Dabei ist auf Seite 8, Zeilen 3 bis 5 der DE-OS auch ein Papier aus einem durchsichtigen Träger und einer opaken Absorptionsschicht erwähnt. Aus den Zeilen 4 bis 7 auf Seite 5 der DE-OS geht hervor, daß die Farbbilder bei beiden Beleuchtungsarten, also auch bei einer Beleuchtung von der Rückseite des Blattes, von der Bildseite aus beobachtet werden.

Der Erfindung lag die Aufgabe zugrunde ein Gerät gemäß dem Oberbegriff des Anspruchs mit einem Registrierstreifem auszurüsten, der genügend reißfest ist und trotzdem eine für den Beobachter scharf gezeichnete Schrift auf der der Schreibseite abgekehrten Oberfläche des Registrierstreifens ermöglicht.

Gemäß der Erfindung wird diese Aufgabe durch die kennzeichnenden Merkmale des Anspruchs 1 gelöst.

Der durchsichtige Trägerteil des Registrierstreifens kann ohne Beeinträchtigung der Beobachtung so dick gemacht werden, daß der Registrierstreifen eine genügend große Reißfestigkeit erhält. Demgegenüber kann die tintenaufnehmende Schicht so dünn gehalten werden, daß eine klar begrenzte, gut lesbare Schrift erhalten wird. Eine Behinderung der Beobachtung durch Reflexionen an der Schauseite des durchsichtigen Trägerteils wird durch die dem Beschauer zugekehrte nicht reflektierende Oberfläche verhindert.

Bei einem Ausführungsbeispiel der Erfindung besteht das durchsichtige Material aus einem entsprechend behandelten Papier.

Bei einem anderen Ausführungsbeispiel wird als durchsichtiges Material eine Kunststoffolie benutzt.

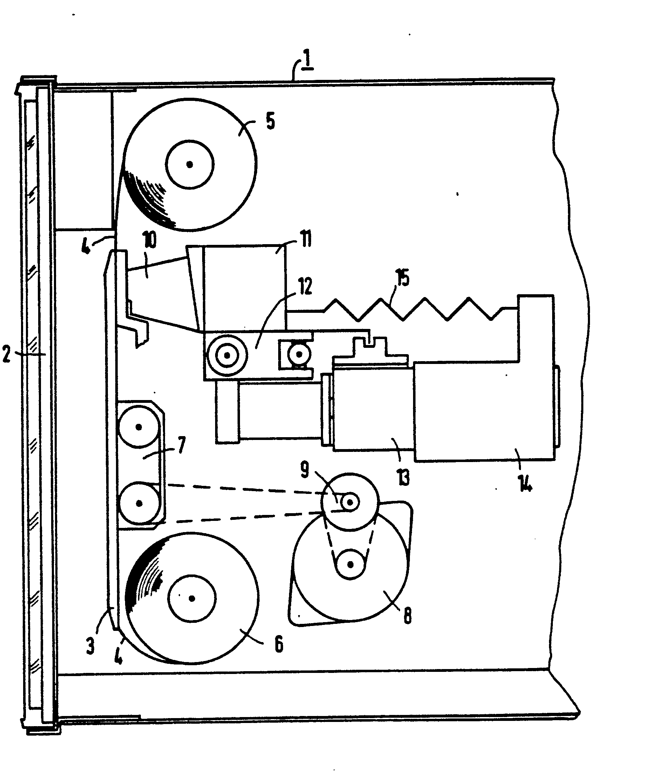

Ein Ausführungsbeispiel für die neue Anordnung ist in der Figur dargestellt.

Die Figur zeigt im Ausschnitt sowie in schematischer Darstellung den Einschub 1 eines elektrischen Registriergerätes, beispielsweise eines Punktdruckers, dessen Frontseite mit der Glasscheibe 2 abgedeckt ist. Hinter dieser Frontscheibe befindet sich eine Führung 3, in welcher der Registrierstreifen 4 von der walzenartigen Vorratsrolle 5 zur ebenfalls walzenartigen Aufwickelrolle 6 von oben nach unten transportiert wird. Der Registrierstreifen 4 wird dabei über eine entsprechende Antriebseinrichtung 7 vorwärtsbewegt, der der Antriebsmotor 8 und ein Zahnriemengetriebe 9 zugeordnet sind.

Auf der dem Inneren des Gerätes zugekehrten Seite des Registrierstreifens 4 ist der Schreibkopf 10 in Form eines Tintendruckkopfes angeordnet. Er ist mit dem Tintenverteiler 11 verbunden, der auf dem Schreibwagen 12 aufsitzt. Der Schreibwagen 12 ist senkrecht zur Bewegungsrichtung des Registrierstreifens 4 bewegbar gelagert und wird von dem Motor 13 angetrieben. Hinter dem Motor 13 befindet sich der Tintentank 14, von dem aus die Schreibflüssigkeit über die flexible Zuleitung 15 dem Verteiler 11 zugeführt wird. Der Schreibkopf 10 ist zusammen mit den zugehörigen Versorgungs- und Antriebseinrichtungen zwischen den beiden Walzen der Vorratsrolle 5 und der Aufwickelrolle 6 angeordnet.

Die aus dem Schreibkopf 10 austretenden Tintentröpfchen treffen von hinten auf den Registrierstreifen 4 auf. Dieser besteht aus einem durchsichtigen Material, das auf der Schreibseite mit einer opaken, tintenaufnehmenden Schicht beschichtet ist und dessen Schauseite eine nichtreflektierende Oberfläche aufweist. Der durchsichtige Trägerteil des Registrierstreifens nimmt die mechanischen Belastungen auf, während die opake Schicht das Schriftbild enthält.

Die beschriebene Art der Aufzeichnung von Kurven und/oder alphanumerischen Zeichen durch Anordnung des Schreibkopfes hinter dem Aufzeichnungspapier ist außer bei Registriergeräten auch bei Druckern und Fernschreibmaschinen möglich.

**Patentansprüche**

1. Elektrisches Gerät mit einer Vorrichtung zum Aufzeichnen von Kurven und/oder alphanumerischen Zeichen, bei der ein linear bewegbarer Schreibkopf (10) einem senkrecht dazu bewegbaren, zwischen zwei Walzen (5, 6) gespannten Registrierstreifen (4) zugeordnet ist, wobei der Schreibkopf (10) auf der dem Geräteinnern zugekehrten Seite des Registrierstreifens (4) angeordnet und als piezoelektrisch angeregter Tintendruckkopf ausgebildet ist, dadurch gekennzechnet, daß der Registrierstreifen (4) aus einem durchsichtigen Material besteht, das auf der Schreibseite mit einer opaken, tintenaufnehmenden Schicht beschichtet ist und dessen Schauseite eine nichtreflektierende Oberfläche aufweist.

2. Elektrisches Gerät nach Anspruch 1, dadurch gekennzeichnet, daß das durchsichtige Material Papier ist.

3. Elektrisches Gerät nach Anspruch 1, dadurch gekennzeichnet, daß das durchsichtige Material eine Kunststoffolie ist.

**Claims**

1. An electrical device with an apparatus for recording curves and/or alphanumerical characters, wherein a linearly movable recording head (10) is assigned to a recording strip (4) which is movable at right angles to the recording head and is fixed between two rollers (5, 6), where the recording head (10) is arranged on that side of the recording strip (4) which faces towards the interior of the device, and comprises a piezoelectrically excitable ink printer head, characterised in that the recording strip (4) consists of a transparent material which is coated on the printing side with an opaque, ink-accommodating coating and whose exposed side has a non-reflective surface.

2. An electrical device as claimed in Claim 1, characterised in that the transparent material is paper.

3. An electrical device as claimed in Claim 1, characterised in that the transparent material is a synthetic foil.

**Revendications**

1. Appareil électrique à dispositif pour tracer des courbes et/ou des signes alpha-numériques et dans lequel une tête d'écriture (10) déplaçable linéairement est associée à une bande d'enregistrement déplaçable perpendiculairement à la direction de déplacement de la tête d'écriture, et tendue entre deux cylindres (5, 6), ladite tête d'écriture (10) étant disposée du côté de la face de la bande d'enregistrement (4), tournée vers l'intérieur de l'appareil et étant réalisée sous la forme d'une tête d'écriture à encre, excitée par voie piézo-électrique, caractérisé par le fait que la bande d'enregistrement (4) est constituée avec un matériau transparent qui est revêtu, sur la face d'écriture, d'une couche opaque capable de recevoir l'encre, alors que sa face visible présente une surface non réfléchissante.

2. Appareil électrique selon la revendication 1, caractérisé par le fait que le matériau transparent est du papier.

3. Appareil électrique selon la revendication 1, caractérisé par le fait que la matière transparente est une feuille de matière plastique.